(19) Europäisches Patentamt
European Patent Office
Office européen des brevets

(11) **EP 4 382 564 A1**

(12) **EUROPEAN PATENT APPLICATION**
published in accordance with Art. 153(4) EPC

(43) Date of publication:
**12.06.2024 Bulletin 2024/24**

(21) Application number: **22853190.1**

(22) Date of filing: **05.08.2022**

(51) International Patent Classification (IPC):
*C08L 15/00* (2006.01)       *C08J 5/18* (2006.01)
*C08L 9/06* (2006.01)        *C08L 23/08* (2006.01)
*C08L 23/12* (2006.01)       *C08L 53/02* (2006.01)
*C08L 83/04* (2006.01)       *C08L 91/00* (2006.01)

(52) Cooperative Patent Classification (CPC):
**C08J 5/18; C08L 9/06; C08L 15/00; C08L 23/08;
C08L 23/12; C08L 53/02; C08L 83/04; C08L 91/00**

(86) International application number:
**PCT/JP2022/030141**

(87) International publication number:
**WO 2023/013772 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021 JP 2021129922**

(71) Applicant: **Mitsui Chemicals, Inc.
Tokyo 104-0028 (JP)**

(72) Inventors:
• **SAEKI, Ryohei
Sodegaura-shi, Chiba 299-0265 (JP)**
• **NAKATSUJI, Ryo
Sodegaura-shi, Chiba 299-0265 (JP)**
• **JITSUKATA, Masakazu
Sodegaura-shi, Chiba 299-0265 (JP)**

(74) Representative: **Hoffmann Eitle
Patent- und Rechtsanwälte PartmbB
Arabellastraße 30
81925 München (DE)**

(54) **THERMOPLASTIC ELASTOMER COMPOSITION AND MOLDED ARTICLE COMPRISING SAME**

(57)     A thermoplastic elastomer composition including components (A) to (E), wherein at least a portion of the composition is cross-linked: (A) 100 parts by mass of a polypropylene-based resin; (B) 40 to 80 parts by mass of an ethylene/$\alpha$-olefin copolymer including an ethylene unit and an $\alpha$-olefin unit having 3 to 20 carbon atoms; (C) 80 to 200 parts by mass of a hydrogenated block copolymer, which is a hydrogenated product of a block copolymer having at least one block (c1) mainly including a conjugated diene monomer unit and at least one block (c2) mainly including a vinyl aromatic monomer unit; (D) 100 to 250 parts by mass of a softener containing components (R) having a relative molecular weight of 600 or less in terms of polystyrene as measured by gel permeation chromatography (GPC) in a proportion of 29% or less; and (E) 5 to 20 parts by mass of polyorganosiloxane.

**Description**

Technical Field

The present invention relates to a thermoplastic elastomer composition and a molded body including the same.

Background Art

Olefin-based thermoplastic elastomers are being more widely used, for example, for automobile parts, industrial machinery parts, electric and electronic parts, and construction materials from the viewpoint of energy conservation, resource conservation, and further recently, global environmental protection because they are light in weight and easily recyclable and also produce no deleterious gas at incineration. Here, in the field of automobile parts, for example, thermoplastic elastomers including a hydrogenated product of a block copolymer containing a vinyl aromatic monomer such as styrene in addition to an olefinic polymer are also widely used.

For example, Patent Document 1 discloses a thermoplastic elastomer containing an ethylene/$\alpha$-olefin copolymer, a hydrogenated product of a block copolymer having a conjugated diene monomer unit and a vinyl aromatic monomer unit, and an olefin-based resin.

The thermoplastic elastomer is known to be blended with a softener such as a mineral oil softener to increase flexibility and rubber elasticity. Patent Document 2 discloses a thermoplastic elastomer composed of a cross-linked composition containing a polypropylene-based resin, a hydrogenated product of a block copolymer having a conjugated diene monomer unit and a vinyl aromatic monomer unit, a softener, and a polyorganosiloxane.

Patent Document 3 discloses that a completely or partially cross-linked olefin-based thermoplastic elastomer composition composed of a crystalline polyolefin, an olefin-based copolymer rubber, and a paraffin-based mineral oil softener may have excellent fogging resistance and gloss by using a mineral oil softener having a specific evaporation loss and kinematic viscosity.

Although there are references to the use of a softener in Patent Document 1 and Patent Document 2 above, they do not describe any influence of the type of the softener to be used on physical properties of the thermoplastic elastomer.

Citation List

Patent Document

Patent Document 1: WO2010/067564
Patent Document 2: WO2011/155571
Patent Document 3: JP 2001-294714A

Summary of Invention

Technical Problem

Various attempts have been made to reduce the fogging phenomenon in an olefin-based thermoplastic elastomer blended with a softener. In recent years, however, it has become necessary to reduce volatile organic compounds (VOCs) from the viewpoint of the environment, and further improvements in the reduction of volatile components and fogging properties are required. Such a reduction in volatile components and an improvement in fogging properties are particularly required, for example, in automobile interior materials. However, since it is known that the formability is often impaired in a thermoplastic elastomer with improved fogging properties, it is desired to realize a thermoplastic elastomer that can achieve both fogging properties and formability.

Therefore, an object of the present invention is to provide a thermoplastic elastomer and a molded body having improved fogging properties while maintaining a certain level of formability.

Solution to Problem

As a result of diligent studies to solve the above problem, the present inventors have found that, in a thermoplastic elastomer containing a softener, a softener having a low content of components with a low relative molecular weight in terms of polystyrene can be employed as the softener to solve the above problem, thus completing the present invention.

Specifically, the present invention relates to the following [1] to [10].

[1] A thermoplastic elastomer composition comprising components (A) to (E) below, wherein at least a portion of the composition is cross-linked.

(A) 100 parts by mass of a polypropylene-based resin;
(B) 40 to 80 parts by mass of an ethylene/$\alpha$-olefin copolymer including an ethylene unit and an $\alpha$-olefin unit having 3 to 20 carbon atoms;
(C) 80 to 200 parts by mass of a hydrogenated block copolymer, which is a hydrogenated product of a block copolymer comprising at least one block (c1) mainly including a conjugated diene monomer unit and at least one block (c2) mainly including a vinyl aromatic monomer unit;
(D) 100 to 250 parts by mass of a softener containing components having a relative molecular weight of 600 or less in terms of polystyrene as measured by gel permeation chromatography (GPC) in a proportion (R) of 29% or less; and
(E) 5 to 20 parts by mass of polyorganosiloxane.

[2] The thermoplastic elastomer composition according to [1], wherein the softener (D) has a kinematic viscosity at 40°C of 300 mm$^2$/s or less.
[3] The thermoplastic elastomer composition according to [1] or [2], wherein the proportion (R) is 25% or less.
[4] The thermoplastic elastomer composition according to any of [1] to [3], wherein an evaporation loss of the softener (D) at 200°C under atmospheric pressure for 1 hour is 0.2% by mass or less.
[5] The thermoplastic elastomer composition according to any of [1] to [4], satisfying requirements (1) to (3) below.

(1) having a melt flow rate (MFR; 230°C, 1.2 kg load) as measured according to ASTM D1238 being 30 to 100 g/10 min.
(2) having a surface hardness (Shore-A hardness, instantaneous value) as measured according to JIS K7215 being 60 to 100.
(3) having a tensile elongation as measured according to JIS K6251 being 100% or more.

[6] The thermoplastic elastomer composition according to any of [1] to [5], wherein the hydrogenated block copolymer (C) includes:
a hydrogenated block copolymer (C1), which is a hydrogenated product of a block copolymer comprising: at least one block (c11) mainly including the conjugated diene monomer unit and further including a vinyl aromatic monomer unit; and at least one block (c2) mainly including the vinyl aromatic monomer unit.
[7] The thermoplastic elastomer composition according to [6], wherein a content of the hydrogenated block copolymer (C1) is 50 parts by mass or more and less than 80 parts by mass based on 100 parts by mass of the polypropylene-based resin (A).
[8] An injection molded body including the thermoplastic elastomer composition according to any of [1] to [7].
[9] A film or sheet including the injection molded body according to [8].
[10] An automobile interior material including the injection molded body according to [8].

Advantageous Effects of Invention

According to the present invention, an olefin-based thermoplastic elastomer and a molded body having improved fogging properties as well as a certain level of formability can be provided.

Description of Embodiments

Hereinafter, specific embodiments of the present invention will be described in detail. However, the present invention is not limited in any way to the following embodiments but can be implemented with appropriate modifications within the intended scope of the present invention.
In the present specification, the term "polymer" is used in an inclusive sense of a homopolymer and a copolymer, unless otherwise stated.
In the present specification, a numerical range expressed with "to" means a range including numerical values placed before and after "to" as a lower limit value and an upper limit value, respectively.
In the present specification, the amount of the respective component means, when there are a plurality of substances corresponding to the component in the composition, the total amount of the substances present in the composition, unless otherwise specified.

[Thermoplastic elastomer composition]

The thermoplastic elastomer composition according to the present invention comprises components (A) to (E) below, and at least a portion of the composition is cross-linked:

(A) 100 parts by mass of a polypropylene-based resin;
(B) 40 to 80 parts by mass of an ethylene/α-olefin copolymer including an ethylene unit and an α-olefin unit having 3 to 20 carbon atoms;
(C) 80 to 200 parts by mass of a hydrogenated block copolymer, which is a hydrogenated product of a block copolymer comprising at least one block (c1) mainly including a conjugated diene monomer unit and at least one block (c2) mainly including a vinyl aromatic monomer unit;
(D) 100 to 250 parts by mass of a softener containing components having a relative molecular weight of 600 or less in terms of polystyrene as measured by gel permeation chromatography (GPC) in a proportion (R) of 29% or less; and
(E) 5 to 20 parts by mass of polyorganosiloxane.

Hereinafter, the thermoplastic elastomer composition according to the present invention will be described in detail.

<Polypropylene-based resin (A)>

The polypropylene-based resin (A) used in the present invention is a homopolymer of propylene or a copolymer of propylene and an olefin other than propylene. In the present invention, the polypropylene-based resin (A) is preferably a polypropylene-based resin selected from at least one of a propylene homopolymer, a random copolymer of propylene and an α-olefin other than propylene, and a block copolymer of propylene and an α-olefin other than propylene.

It is noted that the polypropylene-based resin (A) preferably has a kinematic viscosity at 40°C of more than 500,000 mm$^2$/s. As used herein, "more than 500,000 mm$^2$/s" is a concept that includes cases where a kinematic viscosity cannot be measured due to low flowability.

A preferable starting material olefin for the polypropylene-based resin (A) other than propylene is an α-olefin having 2 or 4 to 20 carbon atoms, and specific examples thereof include ethylene, 1-butene, 1-pentene, 1-hexene, 1-octene, 1-decene, 2-methyl-1-propene, 3-methyl-1-pentene, 4-methyl-1-pentene, and 5-methyl-1-hexene. The form of polymerization may be a random type or block type as long as a resinous product can be obtained. Such polypropylene-based resins can be used singly or in combinations of two or more thereof.

The polypropylene-based resin (A) used in the present invention is preferably a propylene-based polymer having a propylene content of 40 mol% or more, and more preferably a propylene polymer having a propylene content of 50 mol% or more.

Among these polypropylene-based polymers, for example, a propylene homopolymer, a propylene/ethylene block copolymer, a propylene/ethylene random copolymer, and a propylene/ethylene/butene random copolymer are particularly preferred.

The polypropylene-based resin (A) used in the present invention has a melting point in the range of 80 to 170°C, preferably 120 to 170°C.

The polypropylene-based resin (A) used in the present invention preferably has an MFR (ASTM D1238-65T, 230°C, 2.16 kg load) in the range of usually 0.01 to 100 g/10 min, particularly 0.05 to 50 g/10 min.

The stereostructure of the polypropylene-based resin (A) used in the present invention is preferably isotactic structure, however, those having syndiotactic structure or mixture of these structures, or those partially including atactic structure can also be used.

The polypropylene-based resin (A) used in the present invention is polymerized by various known polymerization methods.

<Ethylene/α-olefin copolymer (B)>

The ethylene/α-olefin copolymer (B) used in the present invention includes an ethylene unit and an α-olefin unit having 3 to 20 carbon atoms. The ethylene/α-olefin copolymer (B) can be obtained, for example, by copolymerizing ethylene and an α-olefin having 3 to 20 carbon atoms.

It is noted that the copolymer (B) preferably has a kinematic viscosity at 40°C of more than 500,000 mm$^2$/s. As used herein, "more than 500,000 mm$^2$/s" is a concept that includes cases where a kinematic viscosity cannot be measured due to low flowability.

Specific examples of the α-olefin include propylene, 1-butene, 1-pentene, 1-hexene, 4-methyl-1-pentene, 1-heptene, 1-octene, 1-nonene, 1-decene, 1-undecene, and 1-dodecene. Among these, from the viewpoint of economy,

an $\alpha$-olefin having 3 to 12 carbon atoms is preferable, and particularly, propylene, 1-butene, and 1-octene are more preferable.

If necessary, the ethylene/$\alpha$-olefin copolymer (B) may further include a monomer unit having an unsaturated bond. Such a monomer is not particularly limited, but conjugated diolefins such as butadiene and isoprene; non-conjugated diolefins such as 1,4-hexadiene; cyclic diene compounds such as dicyclopentadiene and a norbornene derivative; and an acetylene are preferable from the viewpoint of economy. Among these, ethylidene norbornene (ENB) and dicyclopentadiene (DCP) are more preferable.

The Mooney viscosity (ML) of the ethylene/$\alpha$-olefin copolymer (B) measured at 100°C is not particularly limited, but is preferably 20 to 150, and more preferably 50 to 120 from the viewpoint of dispersibility in the thermoplastic elastomer composition according to the present embodiment. The Mooney viscosity (ML) of the ethylene/$\alpha$-olefin copolymer (B) is measured according to ASTMD1646.

The ethylene/$\alpha$-olefin copolymer (B) is preferably produced using a metallocene catalyst. The metallocene catalyst is not particularly limited, and examples thereof include those composed of a cyclopentadienyl derivative of metals of Group IV such as titanium and zirconium and a cocatalyst. The metallocene catalyst is not only highly active as a polymerization catalyst, but also gives a polymer having a narrower molecular weight distribution as compared to, for example, a Ziegler-type catalyst. Accordingly, the metallocene catalyst can provide more uniform distribution of the $\alpha$-olefin monomer having 3 to 20 carbon atoms as a comonomer in the copolymer.

In the ethylene/$\alpha$-olefin copolymer (B), the copolymerization ratio of the $\alpha$-olefin is not particularly limited, but is preferably 1 to 60% by mass, more preferably 10 to 50% by mass, and even more preferably 20 to 45% by mass. If the copolymerization ratio of the $\alpha$-olefin is within the above range, the mechanical strength such as tensile strength and flexibility of a resulting molded product are further improved.

The density of the ethylene/$\alpha$-olefin copolymer (B) is not particularly limited, but is preferably 0.80 to 0.90 g/cm$^3$, and more preferably from 0.85 to 0.89 g/cm$^3$. When the density of the ethylene/$\alpha$-olefin copolymer (B) is within the above range, the flexibility of a resulting molded product is further improved.

The ethylene/$\alpha$-olefin copolymer (B) preferably has a long-chain branch. Here, the long-chain branch refers to a branch having 3 or more carbon atoms. The ethylene/$\alpha$-olefin copolymer (B) having a long-chain branch, a molded product having high strength and a low density can be obtained. The ethylene/$\alpha$-olefin copolymer having a long-chain branch is not particularly limited. Known ethylene/$\alpha$-olefin copolymers can also be used as such an ethylene/$\alpha$-olefin copolymer, and, for example, those described in US 5278272A can be used.

The ethylene/$\alpha$-olefin copolymer (B) preferably has a melting point peak measured by differential scanning calorimetry (DSC) in the range of room temperature or higher. If the ethylene/$\alpha$-olefin copolymer (B) has the melting point peak in the range of room temperature or higher, a molded product having high form stability and handling properties in a temperature range of the melting point or lower and less stickiness can be obtained.

The MFR of the ethylene/$\alpha$-olefin copolymer (B) (190°C, 2.16 kg load; according to ASTMD1238) is not particularly limited, but is preferably 0.01 to 100 g/10 min, and more preferably 0.2 to 10 g/10 min. This range of MFR can provide a molded product with an excellent balance between forming flowability and mechanical strength.

The content of the ethylene/$\alpha$-olefin copolymer (B) is 40 to 80 parts by mass, preferably 50 to 70 parts by mass based on 100 parts by mass of the polypropylene-based resin (A) from the viewpoint of the balance between forming flowability and flexibility.

<Hydrogenated block copolymer (C)>

The hydrogenated block copolymer (C) used in the present invention is a hydrogenated product of a block copolymer having at least one block (c1) mainly including a conjugated diene monomer unit (sometimes referred to as a "block (c1)" in the present specification) and at least one block (c2) mainly including a vinyl aromatic monomer unit (sometimes referred to as a "block (c2)" in the present specification). Here the "vinyl aromatic monomer unit" means a constituent unit of a polymer resulting from polymerization of a vinyl aromatic compound as a monomer, and the structure is a molecule structure in which two carbon atoms in a substituted ethylene group derived from a substituted vinyl group are bonding sites. The "conjugated diene monomer unit" means a constituent unit of a polymer resulting from polymerization of conjugated diene as a monomer, and the structure is a molecule structure in which two carbon atoms in olefin derived from the conjugated diene monomer are bonding sites. The expression "mainly including" regarding the block copolymer indicates that the copolymer block includes 50% by mass or more, preferably 60% by mass or more, and more preferably 80% by mass or more of the monomer unit derived from the conjugated diene monomer (or the vinyl aromatic monomer) in the copolymer block. For example, the block mainly including a conjugated diene monomer unit means that the block includes 50% by mass or more, preferably 60% by mass or more, and more preferably 80% by mass or more of the monomer unit derived from the conjugated diene monomer. Similarly, the block mainly including a vinyl aromatic monomer unit means that the block includes 50% by mass or more, preferably 60% by mass or more, and more preferably 80% by mass or more of the monomer unit derived from the vinyl aromatic monomer.

Here, examples of the block (c1) mainly including a conjugated diene monomer unit include a polymer block composed of conjugated diene monomer units (c10) (sometimes referred to herein as the "polymer block (c10)") and a copolymer block (c11) mainly including a conjugated diene monomer unit and further including a vinyl aromatic monomer unit (sometimes referred to herein as the "copolymer block (c11) ") .

Examples of the block (c2) mainly including a vinyl aromatic monomer unit (hereinafter, sometimes referred to as the "block (c2)") include a homopolymer block (c20) composed only of a vinyl aromatic monomer unit and a copolymer block (c21) mainly including a vinyl aromatic monomer unit and further including a conjugated diene monomer unit.

The vinyl aromatic monomer in the present embodiment is not particularly limited, and examples thereof include vinyl aromatic compounds such as styrene, $\alpha$-methylstyrene, p-methylstyrene, divinylbenzene, 1,1-diphenylethylene, N,N-dimethyl-p-aminoethylstyrene, and N,N-diethyl-p-aminoethylstyrene. These may be used singly or in combinations of two or more thereof. Among these, styrene is preferable from the viewpoint of economy.

The conjugated diene monomer in the present embodiment is a diolefin having a pair of conjugated double bonds, and examples thereof include 1,3-butadiene (butadiene), 2-methyl-1,3-butadiene (isoprene), 2,3-dimethyl-1,3-butadiene, 1,3-pentadiene, 2-methyl-1,3-pentadiene, and 1,3-hexadiene. Among these, butadiene and isoprene are preferable from the viewpoint of economy. These may be used singly or in combinations of two or more thereof.

Arrangement of each block in the hydrogenated product of the block copolymer of the present embodiment is not particularly limited, and any suitable arrangement can be adopted as appropriate. For example, in the case where S denotes a polymer block composed of the vinyl aromatic monomer units, and B denotes a polymer block composed of the conjugated diene monomer units and/or partially hydrogenated units thereof, examples of the hydrogenated product of the block copolymer include a linear block copolymer represented by SB, $S(BS)_{n1}$ (where n1 is an integer of 1 to 3), $S(BSB)_{n2}$ (where n2 is an integer of 1 to 2), and a copolymer represented by $(SB)_{n3}X$ (where n3 is an integer of 3 to 6; and X denotes a residue of a coupling agent such as silicon tetrachloride, tin tetrachloride, and a polyepoxy compound). Among these, linear block copolymers of an SB 2-block type (diblock), an SBS 3-block type (triblock), and an SBSB 4-block type (tetrablock) are preferable.

The content of the vinyl aromatic monomer unit in the hydrogenated block copolymer (C) is 30 to 80% by mass, and from the viewpoint of heat resistance and dispersibility, preferably 40 to 80% by mass, and more preferably 50 to 70% by mass. If the content of the vinyl aromatic monomer unit is 30% by mass or more, the mechanical physical properties can be further improved. If the content of the vinyl aromatic monomer unit is 80% by mass or less, low temperature properties can be further improved. The content of the vinyl aromatic monomer unit in the hydrogenated block copolymer (C) can be measured by nuclear magnetic resonance spectrometry (NMR) .

The content of the vinyl aromatic monomer unit block in the hydrogenated block copolymer (C) is preferably 10% by mass or more, and more preferably 10 to 40% by mass from the viewpoint of mechanical strength. Here, the content of the vinyl aromatic compound polymer block in the hydrogenated block copolymer (C) is defined by the following expression using the mass of the vinyl aromatic compound polymer block (where a vinyl aromatic compound polymer having an average polymerization degree of about 30 or less is excluded) obtained by a method of decomposing a copolymer before hydrogenation through oxidation using osmium tetroxide as a catalyst with tert-butyl hydroperoxide (the method described in I. M. Kolthoff, et al., J. Polym. Sci. 1, 429 (1946), and hereinafter, also referred to as an "osmium tetroxide decomposition method"):

Content of the vinyl aromatic compound polymer block (% by mass) = (mass of vinyl aromatic compound polymer block in copolymer before hydrogenation/mass of copolymer before hydrogenation) $\times$ 100

In the case where a plurality of polymer blocks is present in the hydrogenated block copolymer (C), structural features such as the molecular weight and composition of the blocks may be the same or different from each other. For example, the hydrogenated copolymer block including the conjugated diene monomer unit and the vinyl aromatic monomer unit, and the hydrogenated copolymer block mainly including the conjugated diene monomer unit, may be present in the hydrogenated block copolymer (C). The boundary between the blocks and the end of the block do not always need to be clearly distinguished. The aspect of distribution of the vinyl aromatic monomer unit in the respective polymer blocks is not particularly limited and may be uniformly distributed or distributed in a tapered manner, in a step manner, in a projected manner, or in a depressed manner. Moreover, a crystalline portion may be present in the polymer block.

The aspect of the distribution of the vinyl unit of the conjugated diene monomer unit in the respective polymer block is not particularly limited, and for example, the distribution may be lopsided. Examples of a method for controlling distribution of the vinyl unit include a method of adding a vinylating agent during polymerization and a method of changing a polymerization temperature. The conjugated diene monomer unit may have lopsided distribution of the hydrogenation rate. The distribution of the hydrogenation rate can be controlled by a method of changing distribution of the vinyl unit or by a method of utilizing the difference in the hydrogenation speed between an isoprene unit and a butadiene unit when a copolymer obtained by copolymerizing isoprene and butadiene is hydrogenated using a hydrogenation catalyst

6

described later.

In the hydrogenated block copolymer (C), preferably 75 mol% or more, more preferably 85 mol% or more, and even more preferably 97 mol% or more of unsaturated bonds included in the conjugated diene monomer unit before hydrogenation are hydrogenated, from the viewpoint of heat resistance, aging resistance, and weatherability.

The hydrogenation catalyst used for hydrogenation is not particularly limited, and conventionally known catalysts can be used: (1) supported heterogeneous hydrogenation catalysts in which a metal such as Ni, Pt, Pd, and Ru is supported on, for example, carbon, silica, alumina, and diatomaceous earth; (2) so-called Ziegler-type hydrogenation catalysts using a transition metal salt, such as an organic acid salt or an acetylacetone salt of, for example, Ni, Co, Fe, and Cr, and a reducing agent, such as organic aluminum; and (3) homogeneous hydrogenation catalysts of so-called organic metal complexes, such as organic metal compounds of, for example, Ti, Ru, Rh, and Zr. Specific examples of the hydrogenation catalyst include hydrogenation catalysts described in Japanese Patent Publication Nos. S42-008704 B1, S43-006636 B1, S63-004841 B2, H01-037970 B2, H01-053851 B2, and H02-009041 B2. Among these, examples of preferred hydrogenation catalysts include reducing organic metal compounds such as a titanocene compound.

As the titanocene compound, compounds described in JPH08-109219A can be used, for example. Specific examples thereof include compounds having at least one or more ligand having a (substituted) cyclopentadienyl skeleton such as biscyclopentadienyltitanium dichloride and monopentamethylcyclopentadienyltitanium trichloride, an indenyl skeleton, or a fluorenyl skeleton.

Examples of the reducing organic metal compound include an organic alkali metal compound of, for example, organic lithium, an organic magnesium compound, an organic aluminum compound, an organic boron compound, and an organic zinc compound.

A method of polymerizing the hydrogenated block copolymer (C) before hydrogenation in the present embodiment is not particularly limited, and a known method can also be used. Examples thereof include methods described in Japanese Patent Publication Nos. S36-019286 B1, S43-017979 B1, S46-032415 B1, S49-036957 B1, S48-002423 B1, S48-004106 B1, and S56-028925 B2, JPS59-166518A, and JPS60-186577A.

If necessary, the hydrogenated block copolymer (C) may have a polar group. Examples of the polar group include a hydroxy group, a carboxyl group, a carbonyl group, a thiocarbonyl group, an acid halide group, an acid anhydride group, a thiocarboxylic acid group, an aldehyde group, a thioaldehyde group, a carboxylic acid ester group, an amide group, a sulfonic acid group, a sulfonic acid ester group, a phosphorus acid group, a phosphorus acid ester group, an amino group, an imino group, a nitrile group, a pyridyl group, a quinoline group, an epoxy group, a thioepoxy group, a sulfide group, an isocyanate group, an isothiocyanate group, a halogenated silicon group, an alkoxysilicon group, a halogenated tin group, a boronic acid group, a boron containing group, a boronic acid salt group, an alkoxytin group, and a phenyltin group.

In the copolymer before hydrogenation in the hydrogenated block copolymer (C), the content of the vinyl bond in the conjugated diene monomer unit is preferably 5 mol% or more from the viewpoint of flexibility and scratch resistance, and preferably 70 mol% or less from the viewpoint of productivity, elongation at break, and scratch resistance. The content of the vinyl bond in the conjugated diene monomer unit is more preferably 10 to 50 mol%, even more preferably 10 to 30 mol%, and still more preferably 10 to 25 mol%.

As used herein, the content of the vinyl bond means the proportion of the conjugated diene before hydrogenation integrated in the bonding modes of 1,2-bond and 3,4-bond among the one integrated in the bonding modes of 1,2-bond, 3,4-bond, and 1,4-bond. The content of the vinyl bond can be measured by NMR.

The weight-average molecular weight of the hydrogenated block copolymer (C) before crosslinking is not particularly limited but is preferably 50,000 or more from the viewpoint of scratch resistance, preferably 400,000 or less, and more preferably 50,000 to 300,000 from the viewpoint of forming flowability. The molecular weight distribution (Mw/Mn: weight-average molecular weight /number-average molecular weight) is not particularly limited but is preferably a value close to 1 from the viewpoint of scratch resistance. The weight-average molecular weight and the number-average molecular weight can be determined using tetrahydrofuran (1.0 mL/min) as a solvent under the condition of an oven temperature of 40°C by gel permeation chromatography (GPC; manufactured by SHIMADZU Corporation, apparatus name "LC-10") and a column of TSKgelGMHXL (4.6 mm ID × 30 cm, two columns). The weight-average molecular weight (Mw), number-average molecular weight (Mn), and the molecular weight distribution (Mw/Mn) are calculated as a molecular weight in terms of polystyrene.

The amount of hydrogenated block copolymer (C) blended is 80 to 200 parts by mass based on 100 parts by mass of the polypropylene-based resin (A), preferably 90 to 170 parts by mass from the viewpoint of the balance between scratch resistance and flexibility. When the content of the hydrogenated block copolymer (C) is less than 80 parts by mass, the flexibility and scratch resistance are insufficient. When the content is more than 200 parts by mass, the mechanical physical properties may be deteriorated.

The hydrogenated block copolymer (C) preferably includes a hydrogenated block copolymer (C1) which is a hydrogenated product of a block copolymer having, as the block (c1) mainly including the conjugated diene monomer unit, at least one copolymer block (c11) mainly including a conjugated diene monomer unit and further including a vinyl aromatic monomer unit; and at least one block (c2) mainly including the vinyl aromatic monomer unit. In this case, the hydrogenated block copolymer (C) may be composed only of the hydrogenated block copolymer (C1), or may further contain, in addition to the hydrogenated block copolymer (C1), a hydrogenated block copolymer (C2) which is a hydrogenated product of a block copolymer composed of one or more polymer blocks (c10) composed of conjugated diene monomer units and one or more blocks (c2) mainly including vinyl aromatic monomer units.

The copolymer block (c11) mainly including a conjugated diene monomer unit and further including a vinyl aromatic monomer unit is not particularly limited, and the conjugated diene monomer and vinyl aromatic monomer described above can be used. Among these, from the viewpoint of the balance between mechanical strength and impact resistance, examples of a preferred combination thereof include a block including a butadiene unit and a styrene unit and a block including an isoprene unit and a styrene unit.

The copolymer block (c11) may mainly include at least a conjugated diene monomer unit, and the content of each monomer is not particularly limited. In particular, from the viewpoint of the balance between mechanical strength and impact resistance, the content of the vinyl aromatic monomer unit in the copolymer block (c11) is preferably 10% by mass or more and less than 50% by mass, and more preferably 20% by mass or more and less than 50% by mass.

The conjugated diene monomer described above can be used as the conjugated diene monomer constituting the polymer block (c10) composed of conjugated diene monomer units. Such a polymer block (c10) is typically a homopolymer block composed only of a conjugated diene monomer unit, and preferable examples thereof include a homopolymer block composed only of a butadiene unit and a homopolymer block composed only of an isoprene unit. However, the polymer block (c10) does not always completely exclude the presence of monomer units other than the conjugated diene monomer unit as long as it can exert the same action and effect as a homopolymer block composed only of the conjugated diene monomer unit, and may contain, for example, a trace amount of vinyl aromatic monomer units that can inevitably be mixed in due to the production process.

On the other hand, the block (c2) mainly including a vinyl aromatic monomer unit may be, as described above, the homopolymer block (c20) composed only of a vinyl aromatic monomer unit or the copolymer block (c21) mainly including a vinyl aromatic monomer unit and further including a conjugated diene monomer unit, and is preferably the homopolymer block (c20) composed only of a vinyl aromatic monomer unit.

Here, the hydrogenated block copolymer (C1) can be obtained from the vinyl aromatic monomer and the conjugated diene monomer using the method described above. For example, the hydrogenated block copolymer (C1) can be obtained by performing a process including

(Step A1) forming a block (c2) mainly including a vinyl aromatic monomer unit from a vinyl aromatic monomer, and
(Step A2) performing copolymerization of a conjugated diene monomer and a vinyl aromatic monomer on the block (c2) obtained in the step A1
to give a block copolymer, and then
(Step A3) reacting the block copolymer with hydrogen in the presence of the hydrogenation catalyst.

Meanwhile, the hydrogenated block copolymer (C2) can also be obtained from the vinyl aromatic monomer and the conjugated diene monomer using the method described above. For example, the hydrogenated block copolymer (C2) can be obtained by a process including

(Step B1) forming a block (c2) mainly including a vinyl aromatic monomer unit from a vinyl aromatic monomer, and
(Step B2) polymerizing a conjugated diene monomer on the block (c2) obtained in the step A1
to give a block copolymer, and then
(Step B3) reacting the block copolymer with hydrogen in the presence of the hydrogenation catalyst.

Preferably, as the hydrogenated block copolymer (C), at least two or more hydrogenated products of a block copolymer are used in combination, which are selected from (C-1) hydrogenated products of a block copolymer which contains 20% by mass or more and less than 50% by mass of the vinyl aromatic monomer unit block; and (C-2) hydrogenated products of a block copolymer which contains 50% by mass or more and 80% by mass or less of the vinyl aromatic monomer unit block (C-2). The component (C-1) having a small content of the vinyl aromatic monomer unit contributes to the low temperature characteristic of the thermoplastic elastomer composition, and the component (C-2) having a large content of the vinyl aromatic monomer unit contributes to stabilization of morphology of the matrix and the domain in the thermoplastic elastomer composition. The mass ratio (C-1/C-2) of the component (C-1) to the component (C-2) is preferably 90/10 to 60/40 from the viewpoint of low temperature characteristics and mechanical physical properties. For example, when the hydrogenated block copolymer (C) contains two or more hydrogenated block copolymers (C2), it is preferable that one or more hydrogenated block copolymers (C2) constitute the component (C-1) while one or more hydrogenated block copolymers (C2) constitute the component (C-2). When the hydrogenated block copolymer (C) contains the hydrogenated block copolymer (C1) and two or more hydrogenated block copolymers (C2), the hydrogenated block copolymer (C1) and one or more hydrogenated block copolymers (C2) may constitute the component (C-1) while one or more hydrogenated block copolymers (C2) constitutes the component (C-2).

The content of the hydrogenated block copolymer (C1) is also preferably 50 parts by mass or more and less than 80 parts by mass, and more preferably 60 to 75 parts by mass based on 100 parts by mass of the polypropylene-based resin (A).

<Softener (D)>

The softener (D) used in the present invention contains components having a relative molecular weight of 600 or less in terms of polystyrene as measured by gel permeation chromatography (GPC) in a proportion (R) of 29% or less. The proportion (R) is preferably 27% or less, more preferably 25% or less, and even more preferably 23% or less. It is preferable that the proportion (R) is below a certain level because good fogging characteristics can be achieved, such as fogging, especially fogging at high temperatures, being reduced.

The softener used in the present invention has a weight-average molecular weight (Mw) as measured by gel permeation chromatography (GPC) of preferably 100 to 2000, more preferably 300 to 1500, and even more preferably 500 to 1000. The softener used in the present invention has a molecular weight distribution (Mw/Mn) as measured by gel permeation chromatography (GPC) of preferably 0.5 to 5.0, more preferably 0.5 to 3.0, and even more preferably 0.5 to 2.0. It is preferable that the Mw and Mw/Mn are within the above numerical ranges because good fogging characteristics can be achieved.

The evaporation loss of the softener (D) at 200°C under atmospheric pressure for 1 hour is usually 0.3% by mass or less. In view of fogging characteristics, the evaporation loss is preferably 0.2% by mass or less, more preferably 0.15% by mass or less, and even more preferably 0.13% by mass or less. The evaporation loss at 200°C under atmospheric pressure for 3 hours is preferably 1.2% by mass or less, more preferably 1.0% by mass or less, and even more preferably 0.8% by mass or less. The evaporation loss at 200°C under atmospheric pressure for 5 hours is preferably 2.5% by mass or less, more preferably 2.0% by mass or less, and even more preferably 1.5% by mass or less. In the present specification, the evaporation loss is sometimes referred to as a "heating evaporation loss".

The softener (D) contains fogging compounds (FOG) measured according to VDA278 in an amount (sometimes referred to herein as a "FOG value") of preferably 1000 $\mu$g/g or less, more preferably 500 $\mu$g/g or less, and even more preferably 250 $\mu$g/g or less in view of fogging characteristics.

The softener (D) has a kinematic viscosity at 40°C of 500,000 mm$^2$/s or less in most cases. The kinematic viscosity is preferably 400 mm$^2$/s or less, more preferably 300 mm$^2$/s or less, and even more preferably 200 mm$^2$/s or less in view of compatibility with the polypropylene-based resin and formability. The kinematic viscosity of the softener (C) at 40°C is preferably 40 mm$^2$/s or more, and more preferably 50 mm$^2$/s or more.

As the softener (D), any oil can be used as long as it satisfies the above properties. For example, the softener (D) may be a refined mineral oil, a synthetic oil obtained by polymerizing an olefin-based monomer, or a mixture of refined mineral oil and synthetic oil. In addition, the softener (D) may be a non-bio-oil, which is an oil obtained from fossil raw materials, or a bio-oil, which is an oil obtained from animal and plant raw materials.

The refined mineral oil may be a known refined mineral oil, among which one containing paraffin as a main component is preferable. Such a refined mineral oils usually has a flash point of 240°C to 300°C. An example of such a refined mineral oil is disclosed in JP 2000 - 302919A. The refined mineral oil is preferably obtained as follows: A paraffin-based crude oil is distilled under atmospheric pressure, and the resulting residual oil is distilled under reduced pressure with conventional procedures, to give a distillate, which is dewaxed by solvent extraction or by hydrogenation, followed by hydrogenation finishing and subsequent stripping of a light fraction by distillation under reduced pressure.

The synthetic oil is preferably a copolymer of ethylene and an $\alpha$-olefin having 3 to 10 carbon atoms and may contain a small amount of a polyene, if necessary. A single $\alpha$-olefin or two or more $\alpha$-olefins may be used. Among such copolymers, an ethylene/propylene copolymer is particularly preferred. The ethylene content in the synthetic oil used in the present invention is preferably in the range of 50 to 80 mol%, more preferably in the range of 60 to 75 mol%, and particularly preferably in the range of 65 to 75 mol%.

The synthetic oil used in the present invention may be produced by any known method, but it is preferable to produce it especially using a metallocene catalyst. By producing with a metallocene catalyst, a synthetic oil with a narrow molecular weight distribution can be easily obtained, and an olefin-based thermoplastic elastomer with excellent fogging properties is thus obtained.

The amount of the softener (D) blended is 100 to 250 parts by mass, preferably 100 to 150 parts by mass, based on 100 parts by mass of the polypropylene resin (A), from the viewpoint of ensuring good flexibility and processability while suppressing oil bleeding.

<Polyorganosiloxane (E)>

The thermoplastic elastomer composition of the present invention contains a polyorganosiloxane (E). The structure of the polyorganosiloxane (E) is not particularly limited but is preferably a linear, branched, or crosslinking polymer structure from the viewpoint of wear resistance and feeling by touch.

Polyorganosiloxanes used as the polyorganosiloxane (E) are not particularly limited, and known polyorganosiloxanes can also be used. Preferred polyorganosiloxane is a polymer including a siloxane unit having a substituent such as an alkyl group, a vinyl group, and an aryl group. Among these, particularly, polyorganosiloxane having an alkyl group is preferable, and polyorganosiloxane having a methyl group is more preferable.

Specific examples of the polyorganosiloxane having a methyl group include polydimethylsiloxane, polymethylphenylsiloxane, and polymethylhydrogensiloxane. Among these, polydimethylsiloxane is preferable.

The kinematic viscosity of the polyorganosiloxane (E) is not particularly limited. From the viewpoint of wear resistance, the polyorganosiloxane (E) has a kinematic viscosity (25°C) specified in JIS Z8803 of preferably 5,000 centistokes (cSt) or more (i.e., 5,000 $mm^2$/s or more). The kinematic viscosity of the polyorganosiloxane (E) is preferably less than 100,000 cSt (i.e., less than 100,000 $mm^2$/s) because dispersibility of the polyorganosiloxane (E) in the thermoplastic elastomer composition according to the present embodiment tends to be improved, the appearance is good, and stability in quality during melt extrusion tends to be further improved. The kinematic viscosity of the polyorganosiloxane (E) is more preferably 10,000 cSt or more and less than 100,000 cSt (i.e., 10,000 $mm^2$/s or more and less than 100,000 $mm^2$/s), and even more preferably 50,000 cSt or more and less than 100,000 cSt (i.e., 50,000 $mm^2$/s or more and less than 100,000 $mm^2$/s).

The amount of the polyorganosiloxane (E) blended is 5 to 20 parts by mass, preferably 8 to 15 parts by mass, based on 100 parts by mass of the polypropylene resin (A), from the viewpoint of ensuring good wear resistance while suppressing bleeding during forming.

<Configuration of thermoplastic elastomer composition>

The thermoplastic elastomer composition of the present invention contains the polypropylene-based resin (A), the ethylene/α-olefin copolymer (B), the hydrogenated block copolymer (C), the softener (D), and the polyorganosiloxane (E), and at least a portion of the composition is cross-linked.

The thermoplastic elastomer composition of the present invention preferably satisfies requirements (1) to (3) below:

Requirement (1):

The thermoplastic elastomer composition of the present invention has a melt flow rate (MFR; 230°C, 1.2 kg load) as measured according to ASTM D1238 being preferably 30 to 100 g/10 min, and more preferably 50 to 90 g/10 min.

Requirement (2):

The thermoplastic elastomer composition of the present invention has a surface hardness (Shore-A hardness, instantaneous value) as measured according to JIS K7215 being preferably 60 to 100, and more preferably 60 to 80. Here, the surface hardness can be measured by a method as described in Examples below.

Requirement (3):

The thermoplastic elastomer composition of the present invention preferably has a tensile elongation as measured according to JIS K6251 being 100% or more, and more preferably 200% or more. The upper limit of the tensile elongation is not particularly limited as long as the effects of the present invention are not impaired, but is, for example, 600%.

The thermoplastic elastomer composition satisfying the requirements (1) to (3) has properties of easy molding process including injection molding, good tactile sensation, and high durability.

The thermoplastic elastomer composition of the present invention preferably satisfies the following requirement (4) in addition to the requirements (1) to (3):

Requirement (4):

The thermoplastic elastomer composition of the present invention has a melt flow rate (MFR; 230°C, 2.16 kg load) as measured according to ASTM D1238 being preferably 100 to 350 g/10 min, and more preferably 150 to 300 g/10 min, from the viewpoint of formability, durability, and tactile sensation.

A thermoplastic elastomer composition satisfying the requirements (1) to (3), desirably satisfying the requirements (1) to (4), can be produced as described below.

Regarding the requirements (1) and (4), the MFR of the thermoplastic elastomer composition can be adjusted by changing the blending amount of the organic peroxide to be blended when the thermoplastic elastomer as the raw material and the polypropylene-based resin are mixed in the extruder. For example, as the blending amount of the organic peroxide increases, the MFR of the resulting thermoplastic elastomer composition tends to increase.

Regarding the requirement (2), the surface hardness of the thermoplastic elastomer composition can be adjusted by changing the composition of the thermoplastic elastomer composition. For example, as the blending amount of the softener is reduced, the surface hardness of the resulting thermoplastic elastomer composition tends to increase.

Regarding the requirement (3), the tensile elongation of the thermoplastic elastomer composition can be adjusted by changing the composition of the thermoplastic elastomer composition. For example, as the ratio of the hydrogenated block copolymer (C) to the polypropylene resin (A) increases, the tensile elongation of the resulting thermoplastic elastomer composition tends to increase.

As described above, the thermoplastic elastomer composition satisfying (1) to (4) above can be obtained by appropriately adjusting the blending amount of the organic peroxide and the composition of the thermoplastic elastomer composition.

The thermoplastic elastomer composition of the present invention may be composed only of the polypropylene-based resin (A), the ethylene/$\alpha$-olefin copolymer (B), the hydrogenated block copolymer (C), the softener (D), and the polyorganosiloxane (E) as long as at least a portion of the composition is cross-linked. However, the thermoplastic elastomer composition of the present invention may contain, in addition to the polypropylene-based resin (A), the ethylene/$\alpha$-olefin copolymer (B), the hydrogenated block copolymer (C), the softener (D), and the polyorganosiloxane (E), other components (hereinafter, referred to as "other components") that do not correspond to the polypropylene-based resin (A), the ethylene/$\alpha$-olefin copolymer (B), the hydrogenated block copolymer (C), the softener (D), or the polyorganosiloxane (E).

Here, the cross-linking is usually performed in the presence of a crosslinking agent. In one preferred aspect of the present invention, therefore, the thermoplastic elastomer composition of the present invention further contains a crosslinking agent described later. In this case, the composition may further contain a crosslinking auxiliary agent described later. The crosslinking agent and the crosslinking auxiliary agent will be described later in the following "Crosslinking agent" and "crosslinking auxiliary agent", respectively.

Components other than the polypropylene-based resin (A), the ethylene/$\alpha$-olefin copolymer (B), the hydrogenated block copolymer (C), the softener (D), and the polyorganosiloxane (E), an optional crosslinking agent, and an optional crosslinking auxiliary agent, such as an inorganic filler, a plasticizer, and other additives, can be blended with the thermoplastic elastomer composition of the present invention, if necessary, in an amount that does not impair the purpose of the present invention.

Examples of the inorganic filler include calcium carbonate, magnesium carbonate, silica, carbon black, glass fiber, titanium oxide, clay, mica, talc, magnesium hydroxide, and aluminum hydroxide.

Examples of the plasticizer include polyethylene glycol and phthalic acid ester such as dioctyl phthalate (DOP).

Examples of the other additives include organic and inorganic pigments such as carbon black, titanium oxide, and phthalocyanine black; heat stabilizers such as 2,6-di-t-butyl-4-methylphenol and n-octadecyl 3-(3,5'-di-t-butyl-4-hydroxyphenyl)propionate; antioxidants such as tris(nonylphenyl)phosphite and distearyl pentaerythritol diphosphite; ultraviolet absorbers such as 2-(2'-hydroxy-5'-methylphenyl)benzotriazole and 2,4-dihydroxybenzophenone; light stabilizers such as bis-[2,2,6,6-tetramethyl-4-piperidinyl] sebacate, tetrakis(2,2,6,6-tetramethyl-4-piperidinyl)-1,2,3,4-butanetetracarboxylate; flame retardants such as ammonium polyphosphate, trioctyl phosphate, and magnesium hydroxide; silicone oils such as dimethylsilicone oil and methylphenylsilicone oil; anti-blocking agents such as stearamide and erucamide; foaming agents such as sodium bicarbonate and N,N'-dinitrosopentamethylenetetramine; antistatic agents such as palmitic acid monoglyceride and stearic acid monoglyceride; and antibacterial agents such as silver ion carrying zeolite and thiosulfite silver complexes.

Crosslinking agent

The thermoplastic elastomer composition of the present invention may further contain a crosslinking agent in addition to the components (A) to (E). Examples of the crosslinking agent include crosslinking agents generally used, such as organic peroxides, phenol resins, sulfur, hydrosilicone-based compounds, amino resins, quinones or derivatives thereof, amine-based compounds, azo-based compounds, epoxy-based compounds, isocyanate-based compounds, and thermosetting elastomers. In the present invention, the crosslinking agent is preferably an organic peroxide. The organic peroxide can serve, for example, as a crosslinking initiator for the ethylene/$\alpha$-olefin copolymer (B) and the polyorganosiloxane (E) during cross-linking, and can also promote the decomposition reaction of the polypropylene-based resin (A). As a result, the flowability and formability of the thermoplastic elastomer composition can be further improved, and the composition can be more completely filled in a mold without gaps with good conformability, for example, to the mold even in the case of producing a part having a complex shape with a large surface area.

Specific examples of the organic peroxide include peroxyketals such as 1,1-bis(t-butylperoxy)-3,3,5-trimethylcyclohexane, 1,1-bis(t-hexylperoxy)-3,3,5-trimethylcyclohexane, 1,1-bis(t-hexylperoxy)cyclohexane, 1,1-bis(t-butylperoxy)cyclododecane, 1,1-bis(t-butylperoxy)cyclohexane, 2,2-bis(t-butylperoxy)octane, n-butyl-4,4-bis(t-butylperoxy)butane, and n-butyl-4,4-bis(t-butylperoxy)valerate; dialkyl peroxides such as di-t-butyl peroxide, dicumyl peroxide, t-butyl-cumyl peroxide, $\alpha,\alpha'$-bis(t-butylperoxy-m-isopropyl)benzene, $\alpha,\alpha'$-bis(t-butylperoxy)diisopropylbenzene, 2,5-dimethyl-2,5-bis(t-butylperoxy)hexane, and 2,5-dimethyl-2,5-bis(t-butylperoxy)hexyne-3; diacyl peroxides such as acetyl peroxide, isobutyryl peroxide, octanoyl peroxide, decanoyl peroxide, lauroyl peroxide, 3,5,5-trimethylhexanoyl peroxide, benzoyl peroxide, 2,4-dichlorobenzoyl peroxide, and m-tolyoyl peroxide; peroxyesters such as t-butyl peroxyacetate, t-butyl peroxyisobutyrate, t-butyl peroxy-2-ethylhexanoate, t-butyl peroxylaurylate, t-butyl peroxybenzoate, di-t-butyl peroxyisophthalate, 2,5-dimethyl-2,5-di(benzoylperoxy)hexane, t-butyl peroxymaleic acid, t-butyl peroxyisopropyl carbonate, and cumyl peroxyoctate; and hydroperoxides such as t-butyl hydroperoxide, cumene hydroperoxide, diisopropylbenzene hydroperoxide, 2,5-dimethylhexane-2,5-dihydroperoxide, and 1,1,3,3-tetramethylbutyl peroxide.

Among the above compounds, 1,1-bis(t-butylperoxy)-3,3,5-trimethylcyclohexane, di-t-butyl peroxide, dicumyl peroxide, 2,5-dimethyl-2,5-bis(t-butylperoxy)hexane, and 2,5-dimethyl-2,5-bis(t-butylperoxy)hexyne-3 are preferable from the viewpoint of, for example, thermal decomposition temperature and crosslinking performance. In one preferred aspect of the present invention, the crosslinking agent is 2,5-dimethyl-2,5-bis (t-butylperoxy)hexane.

The content of the organic peroxide is preferably 2 to 6 parts by mass, and more preferably 2 to 4 parts by mass based on 100 parts by mass of the polypropylene-based resin (A) from the viewpoint of forming flowability.

Crosslinking auxiliary agent

In the present invention, a crosslinking auxiliary agent may be blended during the crosslinking treatment using the organic peroxide. In other words, when the thermoplastic elastomer composition of the present invention contains the organic peroxide as the crosslinking agent, the thermoplastic elastomer composition may further contain a crosslinking auxiliary agent. The crosslinking auxiliary agent that can be used in the present invention is preferably a monofunctional monomer or a polyfunctional monomer since the crosslinking reaction rate can be controlled.

Examples of the monofunctional monomer preferably include a radically polymerizable vinyl monomer and include an aromatic vinyl monomer, an unsaturated nitrile monomer such as acrylonitrile and methacrylonitrile, an acrylic acid ester monomer, a methacrylic acid ester monomer, an acrylic acid monomer, a methacrylic acid monomer, a maleic anhydride monomer, and an N-substituted maleimide monomer.

Specific examples of the monofunctional monomer include styrene, methylstyrene, chloromethylstyrene, hydroxystyrene, tert-butoxystyrene, acetoxystyrene, chlorostyrene, acrylonitrile, methacrylonitrile, methyl acrylate, ethyl acrylate, n-butyl acrylate, isobutyl acrylate, methyl methacrylate, ethyl methacrylate, n-butyl methacrylate, isobutyl methacrylate, 2-ethylhexyl methacrylate, maleic anhydride, methylmaleic anhydride, 1,2-dimethylmaleic anhydride, ethylmaleic anhydride, phenylmaleic anhydride, N-methylmaleimide, N-ethylmaleimide, N-cyclohexylmaleimide, N-laurylmaleimide, and N-cetylmaleimide. Among these, styrene, acrylonitrile, methacrylonitrile, methyl acrylate, maleic anhydride, and N-methylmaleimide are preferable from the viewpoint of easiness of the reaction and general versatility. These monofunctional monomers may be used singly or in combinations of two or more thereof.

The polyfunctional monomer is a monomer having a plurality of radically polymerizable functional groups as the functional group, and a monomer having a vinyl group is preferable. The number of the functional group in the polyfunctional monomer is preferably 2 or 3.

Specific examples of the polyfunctional monomer preferably include divinylbenzene, triallyl isocyanurate, triallyl cyanurate, diacetone diacrylamide, polyethylene glycol diacrylate, polyethylene glycol dimethacrylate, trimethylolpropane trimethacrylate, trimethylolpropane triacrylate, ethylene glycol dimethacrylate, triethylene glycol dimethacrylate, diethylene glycol dimethacrylate, diisopropenyl benzene, p-quinone dioxime, p,p'-dibenzoyl quinone dioxime, phenyl maleimide, allyl methacrylate, N,N'-m-phenylene bismaleimide, diallyl phthalate, tetraallyl oxyethane, and 1,2-polybutadiene, and divinylbenzene and triallylisocyanurate are more preferable. These polyfunctional monomers may be used singly or in combinations of two or more thereof.

The crosslinking auxiliary agent as described above is preferably used in an amount of 0.5 to 5 parts by mass, and more preferably 1 to 3 parts by mass based on 100 parts by mass of the polypropylene-based resin (A) from the viewpoint of forming flowability.

<Method for producing thermoplastic elastomer composition>

The thermoplastic elastomer composition of the present invention can be obtained by cross-linking a mixture of the polypropylene-based resin (A), the ethylene/$\alpha$-olefin copolymer (B), the hydrogenated block copolymer (C), the softener (D), and the polyorganosiloxane (E). The method of the cross-linking is not particularly limited, and known methods may be used. Here, the cross-linking is preferably carried out in the presence of the crosslinking agent. The conditions for the cross-linking reaction are not particularly limited, and suitable conditions can be appropriately employed, for example, according to the desired physical properties of the thermoplastic elastomer composition of the present embodiment.

For the production of the thermoplastic elastomer composition of the present embodiment, general methods such as a Banbury mixer, a kneader, a single-screw extruder, and a twin-screw extruder, which are used for the production of ordinary elastomer compositions, can be employed. Among these, a twin-screw extruder is preferred from the viewpoint of efficiently achieving dynamic cross-linking of thermoplastic elastomers. The use of a twin-screw extruder is more suitable because, for example, the polypropylene-based resin (A), the polyorganosiloxane (E), and the crosslinking agent are added and uniformly and finely dispersed, followed by addition of other components, thereby causing the cross-linking reaction of the composition to occur. Thus, the thermoplastic elastomer composition can be continuously produced.

It is also preferable to produce the above thermoplastic elastomer composition via the following processing steps. Specifically, the polypropylene-based resin (A), the ethylene/$\alpha$-olefin copolymer (B), and the polyorganosiloxane (E) are mixed well and charged into a hopper of an extruder. In this case, the crosslinking agent may be added to the extruder from the beginning together with the polypropylene-based resin (A), the ethylene/$\alpha$-olefin copolymer (B), and the polyorganosiloxane (E), or a part of the crosslinking agent may be added in the middle of the extruder. Furthermore, a part of the polypropylene-based resin (A), the ethylene/$\alpha$-olefin copolymer (B), and the polyorganosiloxane (E) may be added in the middle of the extruder. The hydrogenated block copolymer (C) may be added in the middle of the extruder or may be added separately in the beginning and in the middle. In this case, the crosslinking agent and the hydrogenated block copolymer (C) may be mixed in advance and then added. The softener (D) can also be added from the beginning, added separately in the beginning and in the middle, or added only in the middle. The method of adding the softener (D) may be a method of adding a master batch containing the softener (D) at a high concentration in advance using an arbitrary thermoplastic resin or elastomer.

In either case, the addition results in a mixture containing the polypropylene-based resin (A), the ethylene/$\alpha$-olefin copolymer (B), the hydrogenated block copolymer (C), the softener (D), and the polyorganosiloxane (E).

Next, the mixture is kneaded in the presence of the crosslinking agent, for example. In a preferred and typical aspect of the present invention, the kneading is carried out in a molten state under heating in an extruder. During heat-melting and kneading in an extruder, the ethylene/$\alpha$-olefin copolymer (B) and the polyorganosiloxane (E) undergo a cross-linking reaction with the crosslinking agent, and at the same time the polypropylene-based resin (A) undergoes a decomposition reaction promoted by the crosslinking agent, thereby serving to improve the forming flowability. Moreover, pellets of the thermoplastic elastomer composition can be obtained by adding and melt-kneading, for example, the hydrogenated block copolymer (C), sufficiently performing the crosslinking reaction and kneading/dispersing, and then taking out from the extruder.

In the process of kneading, the mixture may be cross-linked by dynamic cross-linking. In this case, specifically, the dynamic cross-linking is carried out in such a manner that the mixture is kneaded in a molten state in the presence of the crosslinking agent, and the polypropylene-based resin (A), the ethylene/$\alpha$-olefin copolymer (B), the hydrogenated block copolymer (C), and the polyorganosiloxane (E) are cross-linked and decomposed in a state where a shear force is applied to the mixture. The thermoplastic elastomer composition can also be obtained by the dynamic cross-linking. This dynamic cross-linking is preferably carried out using a twin-screw extruder.

[Molded body]

The molded body according to the present invention comprises the thermoplastic elastomer composition. The molded body can be formed into a film or a sheet. Examples of the use of the molded body include automobile interior materials.

Such a molded body according to the present invention can be obtained by molding the thermoplastic elastomer composition by various molding methods. Examples of the molding methods include injection molding, extrusion, vacuum forming, pressure forming, blow molding, calendering, and foam molding. For example, a molded body such as a skin material can be obtained by filling a mold for molding with the above-described thermoplastic elastomer composition that has been heated and melted, cooling and solidifying the composition, and then removing the composition from the mold.

The thermoplastic elastomer composition of the present embodiment is preferably an injection molded product (injection molded body). When made into an injection molded product, it has excellent productivity. The shape of the injection molded product is not particularly limited, but is preferably a film or a sheet from the viewpoint of application as a skin material.

The injection molded product can be used for various members. Particularly, it is preferable to use the injection molded product as an instrument panel or other automobile interior materials from the viewpoint that thin-walled molded products with complicated shapes can be injection-molded with good reproducibility. Among the automobile interior materials, an instrument panel not only has a small thickness with a large surface area, but also usually has a complicated shape, such as having a molding pattern on the surface, having an opening in a part, having not only a flat portion but also a curved portion, being a three dimensional structure, and having not only a thin portion but also a thick portion. According to the present embodiment, an injection molded body having a small thickness with a large surface area can be obtained, and therefore, it is suitable as an instrument panel or a member thereof.

The shape and configuration of the automobile interior material are not particularly limited, and can be suitably configured according to the application, for example. A preferred example includes a laminate including a layer containing the automobile interior material of the present embodiment (hereinafter, sometimes referred to as a "skin material layer") and a layer containing a core material (hereinafter, sometimes referred to as a "core material layer") that is laminated on the layer containing the automobile interior material. Since the laminate includes not only the skin material layer but also the core material layer, even a three dimensional complex shape can be stably mass-produced, thereby realizing an improvement in production efficiency and a reduction in cost.

The material of the core material is not particularly limited, and known materials can be used, such as polypropylene, acrylonitrile butadiene styrene (ABS) resin, polycarbonate/acrylonitrile butadiene styrene alloy (PC/ABS alloy), acrylonitrile styrene copolymer, and modified polyphenylene oxide, and resins obtained by adding to them fillers such as talc and glass fibers, if necessary, to improve the strength. Among these, a material containing at least one selected from the group consisting of polypropylene, acrylonitrile butadiene styrene (ABS) resin, polycarbonate/acrylonitrile butadiene styrene alloy (PC/ABS alloy), and polyphenylene ether is preferable. In addition, polypropylene is more preferable from the viewpoint of lightweight.

The layer structure of the laminate according to the present embodiment is not particularly limited as long as it has a structure of two or more layers including at least a skin material layer and a core material layer. In the present embodiment, the skin material layer and the core material layer are not necessarily in contact with each other, and another layer may be present between the skin material layer and the core material layer.

The thickness of the skin material layer is not particularly limited, but is preferably 0.5 to 2.0 mm, and more preferably 0.8 to 1.5 mm. When the skin material layer has a thickness of 0.5 mm or more, the appearance, chemical resistance, and wear resistance can be further improved. When the thickness is 2.0 mm or less, the economy and tactile sensation can be further improved. Although it has been difficult to efficiently produce such a thin skin material layer in conventional technologies, such a thin skin material layer can be easily produced by using the thermoplastic elastomer composition of the present embodiment.

The thickness of the core material layer is not particularly limited, but is preferably 2.0 to 4.5 mm, and more preferably 2.5 to 3.5 mm. When the core material layer has a thickness of 2.0 mm or more, the rigidity, heat resistance, and formability can be further improved. When the thickness is 4.5 mm or less, the economy and lightweight can be further improved.

Furthermore, the laminate of the present embodiment preferably further includes a layer containing a foam material between the skin material layer and the core material layer, and the foam material more preferably contains a thermosetting urethane foam having a density of 100 to 250 kg/m$^3$. When the foam material has a density of 100 kg/m$^3$ or more, the material is less likely to be subjected to indentation during handling at the time of production or removal, further improving the handleability. The foam material having a density of 250 kg/m$^3$ or less can impart moderate flexibility to the laminate. From this perspective, the density of the foam material is more preferably 120 to 180 kg/m$^3$.

The type of the thermosetting urethane foam is not particularly limited, but it is preferably a semi-rigid thermosetting urethane foam. The semi-rigid thermosetting urethane foam refers to a urethane foam having an open cell structure of 90% or more.

The method for producing the laminate is not particularly limited, and known methods can also be used. Examples thereof include a method of forming a layer structure by individually molding a skin material, a core material, and a foam material and then stacking the above members using an adhesive such as chloroprene; or a method of forming a core material in advance and then placing the core material in a mold, followed by molding together with the molding of the skin material (integral molding), to form a layer structure by stacking the core material and the two members.

With the above layer structure, it is possible to obtain a laminate which has a skin material with uniform plate thickness, good drawing reproducibility, and good tactile sensation and appearance, and which can be stably mass-produced even in a three dimensional complex shape. Furthermore, a laminate in which the soft tactile sensation of the skin material is further utilized can be obtained by using a three or more layer structure with the above-mentioned foam material.

The laminate can be suitably used, for example, as an instrument panel, a door panel, and a glove box lid having a small thickness with a large surface area, which was previously difficult to be produced by injection molding, among automobile interior members. Particularly, the laminate is suitable as an instrument panel.

According to the instrument panel of the present embodiment, the effects described in the embodiment of the automobile skin material and the laminate can be obtained. The skin material has a good elongation property at low temperatures, thus more easily ensuring the deployment performance of the passenger seat airbag at low temperatures. For example, it is also possible to maintain and improve the degree of freedom in design to make the skin material of the airbag mounting portion seamless.

Examples

Hereinafter, the present invention will be described in detail with reference to Examples, but the present invention is not limited to these Examples. In Examples, various physical properties were measured as described below.

[Measurement method]

(1) Melt flow rate (MFR)

The melt flow rate (MFR) measurements were carried out under conditions of a heating temperature of 230°C and a load of 1.2 kg according to ASTM D1238. The measurements were also carried out under conditions of a heating temperature of 230°C and a load of 2.16 kg, if needed.

(2) Surface hardness (Shore-A hardness)

Shore-A hardness (also referred to as "JIS-A hardness") was measured as the surface hardness. Here, the Shore-A hardness was measured by stacking four 2 mm thick sheets as samples to evaluate them in an atmosphere of 23°C with an A type according to JIS K7215. The hardness at the moment when the tip of the hardness measuring device was lowered onto the sample was measured as the surface hardness (instantaneous value), and the hardness 10 seconds after the lowering was measured as the surface hardness (after 10s).

(3) Mechanical properties (tensile strength and tensile elongation)

The tensile strength (MPa) and tensile elongation (%) were evaluated in an atmosphere of 23°C according to JIS K6251.

(4) Fogging property

The fogging property was measured by testing according to VDA278, integrating the peaks detected higher than the baseline to calculate the FOG value ($\mu$g/g).

(5) Physical properties of hydrogenated block copolymer (C) and corresponding copolymer before hydrogenation

(5-1) Hydrogenation rate

The hydrogenation rate of the hydrogenated block copolymer (C) was measured by nuclear magnetic resonance spectrometry (NMR). A nuclear magnetic resonance spectrometer (manufactured by JEOL Ltd., apparatus name "JNM-LA400") was used as a measuring apparatus. Deuterated chloroform was used as a solvent. Tetramethylsilane (TMS) was used as a chemical shift reference. Measurements were carried out under conditions of a sample concentration of 50 mg/mL, an observation frequency of 400 MHz, a pulse delay of 2.904 seconds, the number of scans of 64, a pulse width of 45°, and a measurement temperature of 26°C.

(5-2) Content of monomer unit and content of bond unit

The contents of a vinyl aromatic monomer unit, an ethylene monomer unit, a butylene monomer unit, a 1,4-bond unit in butadiene, a 1,2-bond unit in butadiene, and a 3,4-bond unit in butadiene contained in the hydrogenated block copolymer (C) and the corresponding copolymer before hydrogenation were each measured by NMR. A nuclear magnetic resonance spectrometer (manufactured by JEOL Ltd., apparatus name "JNM-LA400") was used as a measuring apparatus. Deuterated chloroform was used as a solvent. Tetramethylsilane (TMS) was used as a chemical shift reference. Measurements were carried out under conditions of a sample concentration of 50 mg/mL, an observation frequency of 400 MHz, a pulse delay of 2.904 seconds, the number of scans of 64, a pulse width of 45°, and a measurement temperature of 26°C.

The mass fraction (% by mass) of each constituent unit contained in the ethylene/$\alpha$-olefin copolymer (B) was determined from a measurement value by $^{13}$C-NMR. Specifically, the mass fraction was calculated from a spectrum by $^{13}$C-NMR of the copolymer (A-1) using ECX400P nuclear magnetic resonance apparatus (manufactured by JEOL Ltd.) under conditions of a measurement temperature of 120°C, a measurement solvent of ortho-dichlorobenzene and deuterated benzene at 4:1 (volume ratio), and the number of scans of 8,000.

(5-3) Content of styrene polymer block (Os value)

The content of the styrene polymer block was measured using the corresponding copolymer before hydrogenation according to the method described in I. M. Kolthoff, et al., J. Polym. Sci. 1, 429 (1946) (osmium tetroxide decomposition method). The copolymer before hydrogenation was decomposed using a 0.1 g/125 mL tertiary butanol solution of osmic acid. The content of the styrene polymer block was calculated using the following expression. The content of the styrene polymer block obtained here is referred to as an "Os value".

Content of styrene polymer block (Os value; % by mass) = [(mass of styrene polymer block in copolymer before hydrogenation) / (mass of copolymer before hydrogenation)] $\times$ 100

(5-4) Molecular weight distribution

The hydrogenated block copolymer (C) was subjected to gel permeation chromatography (GPC) measurement under the following conditions to determine the weight-average molecular weight Mw, the number-average molecular weight Mn, and Mw/Mn in terms of polystyrene.

Measurement model: LC-10 manufactured by SHIMADZU CORPORATION
Column: Two TSKgelGMHXL (4.6 mm ID $\times$ 30 cm)
Solvent: Tetrahydrofuran
Temperature: Oven temperature of 40°C
Concentration: 0.1%
Flow rate: 1.0 mL/minute
Detector: Differential refractometer (RI)
Column calibration: monodisperse polystyrene (manufactured by Tosoh Corporation); #3 std set
Molecular weight conversion: polystyrene conversion/standard conversion method

(5-5) Loss tangent (peak temperature of tan $\delta$)

The loss tangent (peak temperature of tan $\delta$) was determined by measuring the viscoelastic spectrum using a viscoelastic measurement analyzer (ARES, manufactured by TA Instruments). The measurement was performed under conditions of a strain of 0.1% and a frequency of 1 Hz.
In Examples and Comparative Examples, the following polymers were used.

(6) Physical properties of softener

(6-1) Kinematic viscosity

The kinematic viscosity of the softener was measured at 40°C and at 100°C according to the measurement method of ISO3104.

(6-2) Heating evaporation loss

The sample softeners were weighed to measure the weight (mass) before heating (W0). Thereafter, the softener was heated in an oven (Geer type Oven ACR-60 type, manufactured by Toyo Seiki Seisaku-sho, Ltd.), and the weight (mass) (W1) after being allowed to cool for 1 hour at room temperature was measured. The difference (WO - W1) between the weight (mass) before heating (W0) and the weight (mass) after heating (W1) was calculated, and the percentage of the difference (WO-W1) with respect to the weight (mass) before heating (W0) was defined as the heating evaporation loss.

The heating was performed under three conditions of "200°C × 1 hour, in air", "200°C × 3 hours, in air", and "200°C × 5 hours, in air" to determine the heating evaporation loss under each condition.

(6-3) Molecular weight distribution

The softener was subjected to gel permeation chromatography (GPC) measurement under the following conditions to determine the relative molecular weight (molecular weight in terms of polystyrene) and its weight fraction (dW/dlogM) at each elution time. A molecular weight distribution curve was then prepared to determine the weight-average molecular weight Mw, number-average molecular weight Mn, and Mw / Mn in terms of polystyrene.

Measurement model: Gel permeation chromatograph HLC-8321 GPC manufactured by Tosoh Corporation
Column: 2x TSKgel GMH6-HT + 2x TSKgel GMH6-HTL (all 7.5 mm I.D.×30 cm, manufactured by Tosoh Corporation)
Solvent: o-dichlorobenzene; ODCB (containing 0.025% BHT)
Column temperature: 140°C
Concentration: 0.1%
Flow rate: 1.0 mL/minute
Detector: Differential refractometer (RI)
Column calibration: monodisperse polystyrene (manufactured by Tosoh Corporation); #3 std set
Molecular weight conversion: polystyrene conversion/standard conversion method

From the molecular weight distribution curve obtained by the GPC measurement above, the proportion (R) of components with a relative molecular weight of 600 or less in terms of polystyrene contained in the softener was determined according to the following formula (1).

$$R(\%) = Im/It \times 100 \qquad \text{Formula (1)}$$

It: Total peak area of the entire molecular weight distribution
Im: Total peak area with a relative molecular weight of 600 or less in terms of polystyrene

[Raw material]

In Examples and Comparative Examples, the following components constituting the composition were used.

<(A) Polypropylene-based resin>

A homopolymer-type polypropylene manufactured by SunAllomer Ltd. (melt flow rate (MFR) of 0.5 g/10 min under conditions of 230°C and a load of 2.16 kg; weight average molecular weight of $6.6 \times 10^5$) (hereinafter, referred to as "A-1") was used as the component (A).

<(B) Ethylene-$\alpha$-olefin copolymer>

A copolymer of ethylene and 1-octene (trade name "ENGAGE 8842" manufactured by The Dow Chemical Company) was used as the component (B). The content of ethylene in the copolymer was 55% by mass, and the content of 1-octene was 45% by mass (hereinafter, referred to as "B-1").

<(C) Hydrogenated block copolymer>

The following hydrogenated products (C1) and (C2) were each used as the hydrogenated block copolymer (C) (referred to as a component (C)).
(C1) Hydrogenated product of copolymer having copolymer block mainly including conjugated diene monomer unit and further including vinyl aromatic monomer unit and vinyl aromatic monomer unit block

Production of hydrogenated product (C1-1)

As the hydrogenated product (C1) of the copolymer having a copolymer block mainly including a conjugated diene monomer unit and further including a vinyl aromatic monomer unit and the vinyl aromatic monomer unit block, a hydrogenated product (C1-1) of a copolymer having a copolymer block mainly including a conjugated diene monomer unit and further including a vinyl aromatic monomer unit and a vinyl aromatic monomer unit block (hereinafter referred to as the "hydrogenated product (C1-1)") was prepared as described below.

(1) Preparation of hydrogenation catalyst

The hydrogenation catalyst used for the hydrogenation reaction of the block copolymer was prepared by the following method:

A reaction vessel purged with nitrogen was charged with 1 L of dried and purified cyclohexane, 100 mmol of bis(cyclopentadienyl)titanium dichloride was added. With sufficient stirring, an n-hexane solution containing 200 mmol of trimethylaluminum was added, to allow them to react at room temperature for about three days.

(2) Production of block copolymer

Batch polymerization was performed using a tank reactor with a stirrer having an inner volume of 10 L and a jacket. First, 6.4 L of cyclohexane and 75 g of styrene were added. TMEDA was added in advance such that the molar amount of TMEDA was 0.25 times as much as the molar amount of Li in n-butyllithium, and an n-butyllithium initiator was added such that the molar amount of Li in the n-butyllithium initiator was 10 mmol, to allow a first polymerization reaction to proceed at an initial temperature of 65°C. After completion of the first polymerization reaction, a cyclohexane solution containing 470 g of butadiene and 380 g of styrene (monomer concentration: 22% by mass) was continuously fed to the reactor at a constant rate over 60 minutes, to allow a second polymerization reaction to proceed. After the completion of the second polymerization reaction, a cyclohexane solution containing 75 g of styrene (monomer concentration: 22% by mass) was further added over 10 minutes, to allow a third polymerization reaction to proceed. Thereafter, the third polymerization reaction was terminated by addition of methanol to give a copolymer. In the obtained copolymer, the styrene content was 53% by mass, and the content of the styrene polymer block in the copolymer was 15% by mass. In the copolymer block (i.e., copolymer block containing the conjugated diene monomer unit and the vinyl aromatic monomer unit), the styrene content was 45% by mass, and the content of the vinyl bond was 23%.

The resulting copolymer (block copolymer) was then subjected to a hydrogenation reaction described below in (3).

(3) Production of hydrogenated product of block copolymer

To the block copolymer obtained in (2) was added the hydrogenation catalyst obtained in (1) above at 100 ppm in terms of titanium based on 100 parts by mass of the block copolymer to perform a hydrogenation reaction of the block copolymer at a hydrogen pressure of 0.7 MPa and a temperature of 75°C. To the polymer solution containing a hydrogenated product of the block copolymer obtained by the hydrogenation reaction was added 0.3 parts by mass of octadecyl-3-(3,5-dit-butyl-4-hydroxyphenyl)propionate as a stabilizer per 100 parts by mass of the hydrogenated product of the block copolymer.

The obtained hydrogenated product (C1-1) of the block copolymer had a weight average molecular weight of 160,000. The hydrogenation rate of double bonds in butadiene contained in the hydrogenated product (C1-1) of the block copolymer was 99%. In addition, one of the tan $\delta$ peaks obtained by viscoelastic measurements was present at -15°C.

(C2) Hydrogenated product of copolymer having polymer block composed of conjugated diene monomer unit and vinyl aromatic monomer unit block

As the hydrogenated product (C2) of the copolymer having a copolymer block composed of a conjugated diene monomer unit and a vinyl aromatic monomer unit block, hydrogenated products (C2-1) and (C2-2) (hereinafter referred to as "hydroxylated product (C2-1)" and "hydrogenated product (C2-2)", respectively) of a copolymer having a polymer block composed of conjugated diene monomer units and a vinyl aromatic monomer unit block were prepared as described below.

Production of hydrogenated product (C2-1)

(1) Production of block copolymer

Batch polymerization was performed using a tank reactor with a stirrer having an inner volume of 10 L and a jacket. First, 6.4 L of cyclohexane and 325 g of styrene were added. TMEDA was added in advance such that the molar amount of TMEDA was 0.40 times as much as the molar amount of Li in n-butyllithium, and n-butyllithium initiator was further added such that the molar amount of Li in the n-butyllithium initiator was 20 mmol. A first polymerization reaction was then allowed to proceed at an initial temperature of 65°C. After completion of the first polymerization reaction, a cyclohexane solution containing 350 g of butadiene (monomer concentration: 22% by mass) was continuously fed to the reactor at a constant rate over 60 minutes, to allow a second polymerization reaction to proceed. After the completion of the second polymerization reaction, a cyclohexane solution containing 325 g of styrene (monomer concentration: 22% by mass) was further added over 10 minutes, to allow a third polymerization reaction to proceed. Thereafter, the third polymerization reaction was terminated by addition of methanol to give a copolymer. The content of the styrene polymer block in the obtained copolymer was 65% by mass, while the content of the vinyl bond was 40%.

The resulting copolymer (block copolymer) was then subjected to a hydrogenation reaction described below in (2).

(2) Production of hydrogenated product of block copolymer

To the block copolymer obtained in (1) was added the hydrogenation catalyst obtained in (1) of "Production of hydrogenated product (C1-1)" at 100 ppm in terms of titanium based on 100 parts by mass of the block copolymer. Thereafter, the block copolymer was subjected to a hydrogenation reaction at a hydrogen pressure of 0.7 MPa and a temperature of 75°C. To the polymer solution containing a hydrogenated product of the block copolymer obtained by the hydrogenation reaction was added 0.3 parts by mass of octadecyl-3-(3,5-di-t-butyl-4-hydroxyphenyl)propionate as a stabilizer per 100 parts by mass of the hydrogenated product of the block copolymer.

The obtained hydrogenated product (C2-1) of the block copolymer had a weight average molecular weight of 50,000. The hydrogenation rate of double bonds in butadiene contained in the hydrogenated product (C2-1) of the block copolymer was 99%.

Production of hydrogenated product (C2-2)

(1) Production of block copolymer

Batch polymerization was performed using a tank reactor with a stirrer having an inner volume of 10 L and a jacket. First, 6.4 L of dried and purified cyclohexane and 175 g of styrene were added. Tetramethylethylenediamine (TMEDA) was added in advance such that the molar amount of TMEDA was 0.30 times as much as the molar amount of Li in an n-butyllithium initiator, and the n-butyllithium initiator was added such that the molar amount of Li in the n-butyllithium initiator was 11 mmol. A first polymerization reaction was then allowed to proceed at an initial temperature of 65°C. After completion of the first polymerization reaction, a cyclohexane solution containing 650 g of butadiene (monomer concentration: 22% by mass) was continuously fed to the reactor at a constant rate over 60 minutes, to allow a second polymerization reaction to proceed. After the completion of the second polymerization reaction, a cyclohexane solution containing 175 g of styrene (monomer concentration: 22% by mass) was further added over 10 minutes, to allow a third polymerization reaction to proceed. Thereafter, the third polymerization reaction was terminated by addition of methanol to give a copolymer. The content of the styrene polymer block in the obtained copolymer was 35% by mass, while the content of the vinyl bond was 36%.

The resulting copolymer (block copolymer) was then subjected to a hydrogenation reaction described below in (2).

(2) Production of hydrogenated product of block copolymer

To the block copolymer obtained in (1) was added the hydrogenation catalyst obtained in (1) of the "Production of hydrogenated product (C1-1)" at 100 ppm in terms of titanium based on 100 parts by mass of the block copolymer. The block copolymer was subjected to a hydrogenation reaction at a hydrogen pressure of 0.7 MPa and a temperature of 75°C to give a reaction solution. To the obtained reaction solution was added 0.3 parts by mass of octadecyl-3-(3,5-di-t-butyl-4-hydroxyphenyl)propionate as a stabilizer per 100 parts by mass of the hydrogenated product of the block copolymer.

The obtained hydrogenated product (C2-2) of the block copolymer had a weight average molecular weight of 150,000. The hydrogenation rate of double bonds in butadiene contained in the hydrogenated product (C2-2) of the block copolymer was 99%.

<(D) Softener and other>

Paraffinic oil (hereinafter, referred to as "D-1") having the physical properties described in Table 1 below was used as the softener (D) (referred to as a component (D)). For reference, as softeners related to the D above, Table 1 also shows the physical properties of trade name "Diana Process Oil PW-380" manufactured by Idemitsu Kosan Co., Ltd.) (hereinafter referred to as "D-2") and a softener (hereinafter referred to as "D-3") prepared according to Example 1 described in JP 2001-294714A.

Paraffinic oil (trade name "Diana Process Oil PW-100" manufactured by Idemitsu Kosan Co., Ltd.) (hereinafter referred to as "D'-1") was used as an "other softener" not corresponding to the component (D) (hereinafter referred to as a "component (D')"). For reference, as a softener related to the D' above, Table 1 also shows the physical properties of a softener (D'- 2) (trade name "Diana Process Oil PW-90" manufactured by Idemitsu Kosan Co., Ltd.) (hereinafter referred to as "D'-2").

The physical properties of D-1 and D'-1 are shown in Table 1 together with the physical properties of D-2, D-3, and D'-2.

[Table 1]

| Item | Condition | Unit | D'-1 | D'-2 | D-1 | D-2 | D-3 |
|---|---|---|---|---|---|---|---|
| Kinematic viscosity | ISO3104 @40°C | mm$^2$/sec | 100 | 96 | 107 | 382 | 102 |
| | ISO3104 @100°C | mm$^2$/sec | 12 | 11 | 12 | 30 | 11 |
| Heating evaporation loss | 200°C×1 hr | % by mass | 0.31 | 0.77 | 0.12 | | 0.22 |
| | 200°C×3 hr | % by mass | 1.21 | | 0.70 | | |
| | 200°C×5 hr | % by mass | 2.56 | | 1.47 | | |
| GPC (polystyrene conversion) | Mw | - | 785 | 773 | 809 | 1360 | 782 |
| | Mn | - | 676 | 662 | 731 | 1190 | 692 |
| | Mw/Mn | - | 1.16 | 1.17 | 1.11 | 1.14 | 1.13 |
| | Proportion (R) of component with relative molecular weight of 600 or less | % | 29.4 | 32.1 | 20.4 | 2.8 | 26.2 |
| Fogging property | FOG value | μg/g | 2741 | 4130 | 95 | 529 | |

<(E) Polyorganosiloxane>

Dimethylsiloxane (trade name "SH200" manufactured by DuPont Toray Specialty Materials K.K., formerly known as Dow Corning Toray Co., Ltd.; kinematic viscosity of 60,000 centistokes (cSt) (i.e., 60,000 mm$^2$/s)) (hereinafter, referred to as "E-1") was used as the polyorganosiloxane (E) (referred to as a component (E)).

<Crosslinking agent and crosslinking auxiliary agent>

The crosslinking agent was used in the form of a crosslinking agent mixture by mixing with the following crosslinking auxiliary agent and the following softener.
Here, 2,5-dimethyl-2,5-bis(t-butylperoxy)hexane (manufactured by NOF Corporation, trade name "PERHEXA 25B") was used as the crosslinking agent.
The crosslinking auxiliary agent (polyfunctional monomer) and the softener blended with the crosslinking agent are as follows. Here, amounts of the following crosslinking auxiliary agent and softener agent are based on 100 parts by mass of the crosslinking agent.
Crosslinking auxiliary agent 1 (triallyl isocyanurate (manufactured by Shinryo Corporation, formerly known as Nippon Kasei Chemical Company Limited; hereinafter, referred to as "TAIC")): 35 parts by mass
Crosslinking auxiliary agent 2 (divinylbenzene (manufactured by FUJIFILM Wako Pure Chemical Corporation, formerly known as Wako Pure Chemical Industries, Ltd.; hereinafter, referred to as "DVB")): 17 parts by mass
Softener (trade name "Diana Process Oil PW-100" manufactured by Idemitsu Kosan Co., Ltd.): 143 parts by mass

[Example 1 and Comparative Example 1]

An extruder used was a twin screw extruder having an oil inlet port in a central portion of a barrel (40 mmφ, L/D = 47; manufactured by Shibaura Machine Co., Ltd., formerly known as Toshiba Machine Co., Ltd., "TEM-58SS"). The screw was a double start screw having a kneading portion before and after an inlet port.

Of the raw materials listed in Table 2 below, raw materials other than the softener (component (D) and the "other softener" (component (D'))) were mixed in batch in the composition ratio (parts by mass ratio) listed in Table 2 below. Then, the mixed raw material was introduced into a twin screw extruder (a cylinder temperature of 200°C) by a constant volume feeder. Subsequently, an amount of the softener was injected by a pump from the inlet port located in the central portion of the twin screw extruder. A resulting mixture was subjected to melt extrusion, to give a thermoplastic elastomer composition. The thermoplastic elastomer composition was used as a sample for evaluation in the evaluation of physical properties of "(1) Melt flow rate (MFR)" and "(4) Fogging property" described above.

The obtained thermoplastic elastomer composition was subjected to compression molding using a heat press (manufactured by Toho Press Seisakusho K.K., "T-50") at 200°C to give a 2 mm thick sheet. The resulting 2 mm thick sheet was used as a sample for evaluation in the evaluation of physical properties of "(2) Surface hardness (Shore-A hardness)" and "(3) Mechanical properties (tensile strength and tensile elongation)" described above.

The formulation of raw materials and the evaluation results of physical properties are shown in Table 2.

[Table 2]

| | | | Unit | Comparative Example 1 | Example 1 |
|---|---|---|---|---|---|
| Formulation | Component (A) | | A-1 | parts by mass | 100 | 100 |
| | Component (B) | | B-1 | parts by mass | 55 | 55 |
| | Component (C) | | C1-1 | parts by mass | 70 | 70 |
| | | | C2-1 | parts by mass | 15 | 15 |
| | | | C2-2 | parts by mass | 30 | 30 |
| | Component (D) | | D-1 | parts by mass | - | 140 |
| | Other softener | | D'-1 | parts by mass | 140 | - |
| | Component (E) | | E-1 | parts by mass | 10.0 | 10.0 |
| | Crosslinking agent mixture | Crosslinking agent | PERHEXA 25B | parts by mass | 3.5 | 3.5 |
| | | Crosslinking auxiliary agent | DVB | parts by mass | 0.6 | 0.6 |
| | | | TAIC | parts by mass | 1.2 | 1.2 |
| | | Softener | PW-100 | parts by mass | 5.0 | 5.0 |

(continued)

| | | | Unit | Comparative Example 1 | Example 1 |
|---|---|---|---|---|---|
| Physical property | MFR | 230°C, 1.2 kgf | g/10 min | 62 | 71 |
| | | 230°C, 2.16 kgf | g/10 min | 235 | 260 |
| | Surface hardness (Shore-A) | Instantaneous value | - | 81 | 80 |
| | | After 10 s | - | 77 | 77 |
| | Tensile test | Tensile strength | MPa | 5.8 | 5.8 |
| | | Tensile elongation | % | 275 | 274 |
| | Fogging property | FOG value | $\mu$g/g | 1076 | 252 |

**Claims**

1. A thermoplastic elastomer composition comprising components (A) to (E) below, wherein at least a portion of the composition is cross-linked:

   (A) 100 parts by mass of a polypropylene-based resin;
   (B) 40 to 80 parts by mass of an ethylene/$\alpha$-olefin copolymer including an ethylene unit and an $\alpha$-olefin unit having 3 to 20 carbon atoms;
   (C) 80 to 200 parts by mass of a hydrogenated block copolymer, which is a hydrogenated product of a block copolymer comprising at least one block (c1) mainly including a conjugated diene monomer unit and at least one block (c2) mainly including a vinyl aromatic monomer unit;
   (D) 100 to 250 parts by mass of a softener containing components having a relative molecular weight of 600 or less in terms of polystyrene as measured by gel permeation chromatography (GPC) in a proportion (R) of 29% or less; and
   (E) 5 to 20 parts by mass of polyorganosiloxane.

2. The thermoplastic elastomer composition according to claim 1, wherein the softener (D) has a kinematic viscosity at 40°C of 300 mm$^2$/s or less.

3. The thermoplastic elastomer composition according to claim 1 or 2, wherein the proportion (R) is 25% or less.

4. The thermoplastic elastomer composition according to claim 1 or 2, wherein an evaporation loss of the softener (D) at 200°C under atmospheric pressure for 1 hour is 0.2% by mass or less.

5. The thermoplastic elastomer composition according to claim 1 or 2, satisfying requirements (1) to (3) below:

   (1) having a melt flow rate (MFR; 230°C, 1.2 kg load) as measured according to ASTM D1238 being 30 to 100 g/10 min;
   (2) having a surface hardness (Shore-A hardness, instantaneous value) as measured according to JIS K7215 being 60 to 100; and
   (3) having a tensile elongation as measured according to JIS K6251 being 100% or more.

6. The thermoplastic elastomer composition according to claim 1 or 2, wherein the hydrogenated block copolymer (C) comprises:
   a hydrogenated block copolymer (C1), which is a hydrogenated product of a block copolymer comprising: at least one block (c11) mainly including the conjugated diene monomer unit and further including a vinyl aromatic monomer unit; and at least one block (c2) mainly including the vinyl aromatic monomer unit.

7. The thermoplastic elastomer composition according to claim 6, wherein a content of the hydrogenated block copolymer (C1) is 50 parts by mass or more and less than 80 parts by mass based on 100 parts by mass of the polypropylene-based resin (A).

8. An injection molded body comprising the thermoplastic elastomer composition according to claim 1 or 2.

9. A film or sheet comprising the injection molded body according to claim 8.

10. An automobile interior material comprising the injection molded body according to claim 8.

## INTERNATIONAL SEARCH REPORT

| International application No. |
| --- |
| **PCT/JP2022/030141** |

### A. CLASSIFICATION OF SUBJECT MATTER

*C08L 15/00*(2006.01)i; *C08J 5/18*(2006.01)i; *C08L 9/06*(2006.01)i; *C08L 23/08*(2006.01)i; *C08L 23/12*(2006.01)i; *C08L 53/02*(2006.01)i; *C08L 83/04*(2006.01)i; *C08L 91/00*(2006.01)i
FI: C08L15/00; C08L23/12; C08L53/02; C08L9/06; C08L23/08; C08L83/04; C08L91/00; C08J5/18

According to International Patent Classification (IPC) or to both national classification and IPC

### B. FIELDS SEARCHED

Minimum documentation searched (classification system followed by classification symbols)

C08L15/00; C08J5/18; C08L9/06; C08L23/08; C08L23/12; C08L53/02; C08L83/04; C08L91/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2011/155571 A1 (ASAHI KASEI CHEMICALS CORP.) 15 December 2011 (2011-12-15)<br>claims, examples 1-6, 13 | 1-10 |
| Y | WO 2007/060843 A1 (MITSUI CHEMICALS INC.) 31 May 2007 (2007-05-31)<br>claims, paragraphs [0001], [0007], [0055] | 1-10 |
| A | WO 2010/067564 A1 (ASAHI KASEI CHEMICALS CORP.) 17 June 2010 (2010-06-17) | 1-10 |
| A | JP 2001-294714 A (MITSUI CHEMICALS INC.) 23 October 2001 (2001-10-23) | 1-10 |
| A | JP 2000-302919 A (IDEMITSU KOSAN CO., LTD.) 31 October 2000 (2000-10-31) | 1-10 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 October 2022** | **18 October 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/030141**

| Patent document cited in search report | | | Publication date (day/month/year) | Patent family member(s) | | | Publication date (day/month/year) |
|---|---|---|---|---|---|---|---|
| WO | 2011/155571 | A1 | 15 December 2011 | US 2013/0209787 A1 claims, examples 1-6, 13 | | | |
| | | | | EP 2581412 | A1 | | |
| | | | | CN 103025822 | A | | |
| | | | | KR 10-2013-0020898 | A | | |
| WO | 2007/060843 | A1 | 31 May 2007 | US 2009/0171006 A1 claims, paragraphs [0001], [0009], [0066] | | | |
| | | | | EP 1964883 | A1 | | |
| | | | | CN 101309960 | A | | |
| | | | | KR 10-2008-0077229 | A | | |
| WO | 2010/067564 | A1 | 17 June 2010 | US 2011/0281994 | A1 | | |
| | | | | EP 2365031 | A1 | | |
| | | | | CN 102245697 | A | | |
| | | | | TW 201026765 | A | | |
| JP | 2001-294714 | A | 23 October 2001 | US 2001/0016620 | A1 | | |
| | | | | EP 1123946 | A2 | | |
| | | | | TW 588085 | B | | |
| | | | | KR 10-2001-0078775 | A | | |
| | | | | CN 1312322 | A | | |
| JP | 2000-302919 | A | 31 October 2000 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010067564 A
- WO 2011155571 A
- JP 2001294714 A
- US 5278272 A
- JP S42008704 B
- JP S43006636 B
- JP S63004841 B
- JP H01037970 B
- JP H01053851 B
- JP H02009041 B
- JP H08109219 A

- JP S36019286 B
- JP S43017979 B
- JP S46032415 B
- JP S49036957 B
- JP S48002423 B
- JP S48004106 B
- JP S56028925 B
- JP S59166518 A
- JP S60186577 A
- JP 2000302919 A

**Non-patent literature cited in the description**

- **I. M. KOLTHOFF et al.** *J. Polym. Sci.,* 1946, vol. 1, 429